# EUROPEAN PATENT APPLICATION

(11) **EP 2 505 626 A1**
(43) Date of publication of application: **03.10.2012**
(21) Application number: 12161295.6
(22) Date of filing: 26.03.2012
(51) Int. Cl.: C09D 183/08

(54) **An oil-repellent coating material composition**

(30) Priority: 31.03.2011 JP 2011077795
(71) Applicant: Wacker Chemie AG, 81737 München (DE)
(72) Inventor: Kuwata, Kotaro, Kawasaki-City, Kanagawa 211-0053 (JP)
(74) Representative: Mieskes, Klaus Theoderich

(57) **Abstract**

An oil-repellent coating material composition characterized by comprising:
(A) an alkoxysilane, represented by the following general formula (1), having a hydrocarbon group to which at least one or more fluorine atoms are bonded;

R^{f}[-X-Y-SiR¹ₐ(OR²)₃₋ₐ]ₘ (1)

wherein
R^{f} represents an alkyl group, an alkenyl group, or an aromatic hydrocarbon group, the group having at least one or more fluorine atoms and 1 to 20 carbon atoms;
X represents an oxygen atom or a divalent organic group containing an oxygen atom;
Y represents a spacer group represented by (CH(Z)-)ₙ
wherein Z is a substituent selected from a hydrogen atom, a halogen atom, or a hydrocarbon group having 1 to 3 carbon atoms, and n denotes an integer of 2 to 8;
R¹ and R² may be the same or different hydrocarbon group(s) having 1 to 10 carbon atoms;
m is 1 or 2; and
a is 0, 1, or 2); and

(B) a condensation catalyst.

## Description

The present invention relates to a coating material composition having oil repellency. Since the obtained coating material has a low surface energy and exhibits excellent oil repellency, it can be applied for various substrates and applications, especially for silicone rubber.

Silicone rubber is used in various applications due to its excellent properties. However, since silicone rubber is compatible with oils, its oil resistance and oil repellency is insufficient, which can limit its applications. Various techniques have been investigated to resolve how to impart oil resistance and oil repellency to the surface of a substrate such as silicone rubber. One such known method imparts oil repellency by introducing a fluoro group into a polydimethylsiloxane skeleton forming the silicone rubber. For example, a curable fluoropolyether silicone rubber having a perfluoropolyether structure in the main chain is known (see Patent Literature 1: Japanese Patent Application Laid-Open No. 2006-299109). According to this method, oil repellency can be imparted to the silicone rubber surface due to the effects of the introduced fluoro group. However, these fluoropolyether compounds suffer from the problem that they are all complex and difficult to produce, and also that they are not economically favorable due to the fact that a large amount thereof has to be added in order to exhibit an effect. Moreover, these fluoropolyether compounds also have the drawback that a fluorine-based solvent needs to be used during the production of this component.

Another known method imparts oil repellency by coating a rubber surface using a fluorine-containing compound that includes a hydrolyzable group in the molecule, such as a fluoroalkyl group or an alkoxysilyl group. For example, a method has been proposed that uses a fluorine-containing compound which has a fluoroalkyl group on both ends and which is bonded to a hydrolyzable group such as a trimethoxysilyl group via an intermediate group (see Patent Literature 2: Japanese Patent Application Laid-Open No. 2004-352742). According to this method, an oil-repellent surface-treated layer is formed at the surface of a target article by applying a monomer solution containing the fluorine-containing compound onto a rubber surface, and carrying out a hydrolysis condensation reaction with the trimethylsilyl groups. However, when a silicone rubber surface is treated with a composition formed based on this method, although a certain level of oil repellency is exhibited, the oil repellency is not sufficient to satisfy applications requiring even higher oil repellency.

Another known method imparts oil repellency by surface-coating a silicone rubber surface with a fluoro-organic polymer, such as polytetrafluoroethylene or a polytetrafluoroethylene-perfluoroalkyl vinyl ether copolymer (see Patent Literature 3: Japanese Patent Application Laid-Open No. 2003-171519). Although good oil repellency is obtained, this method suffers from the problems that this method is not economically favorable due to a special primer required, when these fluoro-organic polymers are coated on the silicone rubber surface, and its complexity caused by the increase in the number of steps, and that the silicone rubber needs to have a heat resistance exceeding 300°C due to the exposure to high temperatures during the treatment.

In view of the above-described circumstances, it is an object of the present invention to provide a coating material composition that exhibits excellent oil repellency when applied onto the surface of various substrates, especially silicone rubber.

Based on diligent research to resolve the above-described problems, the present inventor made the surprising discovery that excellent oil repellency can be imparted by coating a compound having a fluorine atom-containing hydrocarbon group that is linked by an organic group having a specific structure and an alkoxysilyl group on a metal, glass, plastic, or rubber surface. In addition, the present inventor discovered that extremly excellent oil repellency is exhibited when this compound is coated on a silicone rubber material surface, thereby arriving at the present invention. More specifically, the present invention is as follows.

An oil-repellent coating material composition characterized by comprising:
(A) an alkoxysilane, represented by the following general formula (1), having a hydrocarbon group to which at least one or more fluorine atoms are bonded;

   R^{f}[-X-Y-SiR¹ₐ(OR²)₃₋ₐ]ₘ (1)

   wherein
   R^{f} represents an alkyl group, an alkenyl group, or an aromatic hydrocarbon group, the group having at least one or more fluorine atoms and 1 to 20 carbon atoms;
   X represents an oxygen atom or a divalent organic group containing an oxygen atom;
   Y represents a spacer group represented by (CH(Z)-)ₙ
   wherein Z is a substituent selected from a hydrogen atom, a halogen atom, or a hydrocarbon group having 1 to 3 carbon atoms, and n denotes an integer of 2 to 8;
   R¹ and R² may be the same or different hydrocarbon group(s) having 1 to 10 carbon atoms;
   m is 1 or 2; and
   a is 0, 1, or 2); and
(B) a condensation catalyst.

In a preferred embodiment the oil-repellent coating material composition is characterized by further comprising 0.001 to 10,000 parts by weight of (C) an alkoxysilane represented by the following general formula (2) and that does not contain a fluorine atom and/or a hydrolysis-condensation product thereof based on 100 parts by weight of the component (A), and/or 0.001 to 10, 000 parts by weight of (D) a silicone resin based on 100 parts by weight of the component (A),

SiR³_{b} (OR⁴) _{4-b} (2)

wherein
R³ represents a hydrocarbon group that does not contain a fluorine atom and that has 1 to 12 carbon atoms,
R⁴ represents an alkyl group having 1 to 12 carbon atoms or an acyl group having 1 to 12 carbon atoms, and
b denotes 0 or an integer of 1 to 3.

In a preferred embodiment the oil-repellent coating material composition according to above, is **characterized in that**, that X in the general formula (1) is an ester group.

The oil-repellent coating material composition according to this invention is used for coating silicone rubber.

Since the coating material composition of the present invention exhibits excellent oil repellency, the composition can be utilized in various applications, especially in applications for silicone rubber that require oil repellency. For example, the coating material composition is useful as a coating material in industrial fields such as automotive, electronic, electric, and construction fields.

The present invention will now be described in more detail.

The fluorine compound used as the component (A) in the present invention is an essential component used to impart excellent oil repellency to the composition of the present invention. This fluorine compound is an alkoxysilane that is represented by the following general formula (1) and has a hydrocarbon group to which at least one or more fluorine atoms are bonded.

R^{f} [-X-Y-SiR¹ₐ(OR²)₃₋ₐ]ₘ (1)

In the formula (1), R^{f} represents an alkyl group, an alkenyl group, or an aromatic hydrocarbon group, the group having at least one or more fluorine atoms and 1 to 20 carbon atoms. Specifically, if R^{f} is an aromatic hydrocarbon group, R^{f} is a group like the following: C₆F₅-, C₆H₄F-, C₆H₃F₂-, C₆H₂F₃-, C₆H₃FC1-, C₆H₃BrF-, C₆H₃FI-, and C₆H₃(CF₃)₂-.

If R^{f} is an alkyl group, Rf is a group like the following: CF₃-, C₂F₅-, C₃F₇-, C₄F₉-, C₅F₁₁-, C₆F₁₃-, C₇F₁₅-, C₈F₁₇-, C₉F₁₉-, C₁₀F₂₁-, C₁₁F₂₃-, C₁₂F₂₅-, C₁₃F₂₇-, C₁₄F₂₉-, C₁₅F₃₁-, C₁₆F₃₃-, G₁₇F₃₅-, C₂HF₄-, C₃HF₆-, C₄HF₈-, C₅HF₁₀-, C₆HF₁₂-, C₇HF₁₄-, C₈HF₁₆-, C₉HF₁₈-, C₁₀HF₂₀-, C₁₁HF₂₂-, C₁₂HF₂₄-, CF₃CH₂-, C₂F₅- (CH₂)ₛ- (herein, s denotes an integer of 1 to 8, which is applied to the following definition, if any), C₃F₇-(CH₂)ₛ-, C₄F₉-(CH₂)ₛ-, C₅F₁₁-(CH₂)ₛ-, C₆F₁₃-(CH₂)ₛ-, C₇F₁₅-(CH₂)ₛ-, C₈F₁₇-(CH₂)ₛ-, C₉F₁₉-(CH₂)ₛ-, C₁₀F₂₁-(CH₂)ₛ-, C₁₁F₂₃-(CH₂)ₛ-, and C₁₂F₂₅-(CH₂)ₛ-.

If R^{f} is an alkenyl group, R^{f} is a group like the following: CF₃CF=CF-, CF₃CF=CF-CF₂-, CF₃CF=CF-C₂F₄-, CF₃CF=CF-C₃F₆-, CF₃CF=CF-C₄F₈-, CF₃CF=CF-C₅F₁₀-, CF₃CF=CF-C₆F₁₂-, CF₃CF=CF-C₇F₁₄-, CF₃CF=CF-C₈F₁₆-, CF₃CF=CF-C₉F₁₈-, and CF₃CF=CF-C₁₀F₂₀-.

If R^{f} is an alkyl group, as illustrated below, R^{f} may include an ether bond, a sulfonyl group, a carboxyl group, or another halogen atom. Specific examples of such an Rf include: CF₃CF(-OCF₃)-, CF₃CF(-OCF₃)-CF₂-, CF₃CF(-OCF₃)-C₂F₄-, CF₃CF(-OCF₃)-C₃F₆-, CF₃CF(-OCF₃)-C₄F₈-, CF₃CF(-OCF₃)-C₅F₁₀-, CF₃CF(-OCF₃)-C₆F₁₂-, CF₃CF(-OCF₃)-C₇F₁₄-, CF₃CF(-OCF₃)-C₈F₁₆-, CF₃CF(-OCF₃)-C₉F₁₈-, CF₃CF(-OCF₃)-C₁₀F₂₀-, F-SO₂-C₂F₄-, F-SO₂-C₃F₆-, F-SO₂-C₄F₈-, F-SO₂-C₅F₁₀-, F-SO₂-C₆F₁₂-, F-SO₂-C₇F₁₄-, F-SO₂-C₈F₁₆-, F-SO₂-C₉F₁₈-, F-SO₂-C₁₀F₂₀-, F-SO₂-CₜF₂ₜ-O-CᵤF₂ᵤ- (t and u each denote an integer of 1 to 10), HOOC-C₂F₄-, HOOC-C₃F₆-, HOOC-C₄F₈-, HOOC-C₅F₁₀-, HOOC-C₆F₁₂-, HOOC-C₇F₁₄-, HOOC-C₈F₁₆-, HOOC-C₉F₁₈-, HOOC-C₁₀F₂₀-, C₂F₅-O-C₂F₄-, C₃F₇-O-C₂F₄-, C₄F₉-O-C₂F₄-, C₅F₁₁-O-C₂F₄-, C₆F₁₃-O-C₂F₄-, C₇F₁₅-O-C₂F₄-, C₈F₁₇-O-C₂F₄-, C₉F₁₉-O-C₂F₄-, C₁₀F₂₁-O-C₂F₄-, C₁₁F₂₃-O-C₂F₄- C₂BrF₄-, C₃BrF₆-, C₄BrF₈-, C₅BrF₁₀-, C₆BrF₁₂-, C₇BrF₁₄-, C₈BrF₁₆-, C₉BrF₁₈-, C₁₀BrF₂₀-, C₂ClF₄-, C₃ClF₆-, C₄ClF₈-, C₅ClF₁₀-, C₆ClF₁₂-, C₇ClF₁₄-, C₈ClF₁₆-, C₉ClF₁₈-, C₁₀ClF₂₀-, C₂IF₄-, C₃IF₆-, C₄IF₈-, C₅IF₁₀-, C₆IF₁₂-, C₇IF₁₄-, C₈IF₁₆-, C₉IF₁₈-, and C₁₀IF₂₀-. If the above-described fluorine atom-containing hydrocarbon Rf is an alkyl group or an alkenyl group, Rf may be linear or branched.

X in the general formula (1) represents an oxygen atom or a divalent organic group containing an oxygen atom. For example, X is a spacer group selected from -0-, -OC (O) -, and -CH (-OH) -, which acts as a spacer group between the spacer group Y bonded to the silicon atom in the general formula (1) and the fluorine-containing group R^{f}.

Y in the general formula (1) represents a spacer group represented by -(CH(Z)-)ₙ, wherein Z is a substituent selected from a hydrogen atom, a halogen atom, or a hydrocarbon group having 1 to 3 carbon atoms, and n denotes an integer of 2 to 8. Specific examples of Y include -(CH₂)₂-, -(CH₂)₃-, -(CH₂)₄-, -(CH₂)₅-, -(CH₂)₆-, -CH₂-CH(CH₃)-, -CH(CH₃)-CH₂-, -(CHF)₂-, -(CHCl)₂-, -(CHBr)₂-, -(CHI)₂-, -CH₂-CHF-, -CH₂-CHCl-, -CH₂-CHBr-, -CH₂-CHI-, -CHF-CHCl-, -CHF-CHBr-, -CHF-CHI-, -CHCl-CHBr-, -CHCl-CHI-, and -CHBr-CHI-.

R¹ and R² in the general formula (1) may be the same or different hydrocarbon group(s) having 1 to 10 carbon atoms. It is preferred to use a methyl group as R¹ and a methyl group, an ethyl group, or a propyl group as R². m is 1 or 2, and a is 0, 1, or 2.

Among the above-described fluorine-containing alkoxysilanes, to impart excellent oil repellency to the silicone composition of the present invention, it is especially preferred to use an alkoxysilane in which the X in the component (A) is an ester group. Specific examples thereof include C₆F₅-CH₂-OC(O)-(CH₂)₂-Si(OCH₃)₃, C₆F₅-CH₂-OC(O)-(CH₂)₂-SiCH₃(OCH₃)₂, C₆F₅-CH₂-OC(O)-CH(CH₃)-CH₂-Si(OCH₃)₃, C₆F₅-CH₂-OC(O)-CH(CH₃)-CH₂-SiCH₃(OCH₃)₂, F-SO₂-(CF₂)₄-(CH₂)₂-OC(O)-(CH₂)₂-Si(OCH₃)₃, F-SO₂-(CF₂)₄-(CH₂)₂-OC(O)-(CH₂)₂-SiCH₃(OCH₃)₂, F-SO₂-(CF₂)₆-(CH₂)₂-OC(O)-(CH₂)₂-Si(OCH₃)₃, F-SO₂-(CF₂)₆-(CH₂)₂-OC(O)-(CH₂)₂-SiCH₃(OCH₃)₂, F-SO₂-(CF₂)₈-(CH₂)₂-OC(O)-(CH₂)₂-Si(OCH₃)₃, F-SO₂-(CF₂)₈-(CH₂)₂-OC(O)(CH₂)₂-SiCH₃(OCH₃)₂, F-SO₂-(CF₂)₄-(CH₂)₂-OC(O)-CH(CH₃)-CH₂-Si(OCH₃)₃, F-SO₂-(CF₂)₄-(CH₂)₂-OC(O)-CH(CH₃)-CH₂-SiCH₃(OCH₃)₂, F-SO₂-(CF₂)₆-(CH₂)₂-OC(O)-CH(CH₃)-CH₂-Si(OCH₃)₃, F-SO₂-(CF₂)₆-(CH₂)₂-OC(O)-CH(CH₃)-CH₂-SiCH₃(OCH₃)₂, F-SO₂-(CF₂)₈-(CH₂)₂-OC(O)-CH(CH₃)CH₂-Si(OCH₃)₃, F-SO₂-(CF₂)₈-(CH₂)₂-OC(O)-CH(CH₃)-CH₂-SiCH₃(OCH₃)₂, HOOC-(CF₂)₄-(CH₂)₂-OC(O)-(CH₂)₂-Si(OCH₃)₃, HOOC-(CF₂)₄-(CH₂)₂-OC(O)-(CH2)2-SiCH3(OCH3)2, HOOC-(CF₂)₆-(CH₂)₂-OC(O)-(CH₂)₂-Si(OCH₃)₃, HOOC-(CF₂)₆-(CH₂)₂-OC(O)-(CH₂)₂-SiCH₃(OCH₃)₂, HOOC-(CF₂)₈-(CH₂)₂-OC(O)-(CH₂)₂-Si(OCH₃)₃, HOOC-(CF₂)₈-(CH₂)₂-OC(O)-(CH2)2-SiCH3(OCH3)2, HOOC-(CF₂)₄-(CH₂)₂-OC(O)-CH(CH₃)-CH₂-Si(OCH₃)₃, HOOC-(CF₂)₄-(CH₂)₂-OC(O)-CH(CH₃)-CH₂-SiCH₃(OCH₃)₂, HOOC-(CF₂)₆-(CH₂)₂-OC(O)-CH(CH₃)-CH₂-Si(OCH₃)₃, HOOC-(CF₂)₆-(CH₂)₂-OC(O)-CH(CH₃)-CH₂-SiCH₃(OCH₃)₂, HOOC-(CF₂)₈-(CH₂)₂-OC(O)-CH(CH₃)-CH₂-Si(OCH₃)₃, HOOC-(CF₂)₈-(CH₂)₂-OC(O)-CH(CH₃)-CH₂-SiCH₃(OCH₃)₂, CF₃(CF₂)₃-(CH₂)₂-OC(O)-(CH₂)₂-Si(OCH₃)₃, CF₃(CF₂)₃-(CH₂)₂-OC(O)-(CH₂)₂-SiCH₃(OCH₃)₂, CF₃(CF₂)₄-(CH₂)₂-OC(O)-(CH₂)₂-Si(OCH₃)₃, CF₃(CF₂)₄-(CH₂)₂-OC(O)-(CH₂)₂-SiCH₃(OCH₃)₂, CF₃(CF₂)₅-(CH₂)₂-OC(O)-(CH₂)₂-Si(OCH₃)₃, CF₃(CF₂)₅-(CH₂)₂-OC(O)-(CH₂)₂-SiCH₃(OCH₃)₂, CF₃(CF₂)₆-(CH₂)₂-OC(O)-(CH₂)₂-Si(OCH₃)₃, CF₃(CF₂)₆-(CH₂)₂-OC(O)-(CH₂)₂-SiCH₃(OCH₃)₂, CF₃(CF₂)₇-(CH₂)₂-OC(O)-(CH₂)₂-Si(OCH₃)₃, CF₃(CF₂)₇-(CH₂)₂-OC(O)-(CH₂)₂-SiCH₃(OCH₃)₂, CF₃(CF₂)₃-(CH₂)₂-OC(O)-CH(CH₃)-CH₂-Si(OCH₃)₃, CF₃(CF₂)₃-(CH₂)₂-OC(O)-CH(CH₃)-CH₂-SiCH₃(OCH₃)₂, CF₃(CF₂)₄-(CH₂)₂-OC(O)-CH(CH₃)-CH₂-Si(OCH₃)₃, CF₃(CF₂)₄-(CH₂)₂-OC(O)-CH(CH₃)-CH₂-SiCH₃(OCH₃)₂, CF₃(CF₂)₅-(CH₂)₂-OC(O)-CH(CH₃)-CH₂-Si(OCH₃)₃, CF₃(CF₂)₅-(CH₂)₂-OC(O)-CH(CH₃)-CH₂-SiCH₃(OCH₃)₂, CF₃(CF₂)₆-(CH₂)₂-OC(O)-CH(CH₃)-CH₂-Si(OCH₃)₃, CF₃(CF₂)₆-(CH₂)₂-OC(O)-CH(CH₃)CH₂-SiCH₃(OCH₃)₂, CF₃(CF₂)₇-(CH₂)₂-OC(O)-CH(CH₃)-CH₂-Si(OCH₃)₃, CF₃(CF₂)₇-(CH₂)₂-OC(O)-CH(CH₃)-CH₂-SiCH₃(OCH₃)₂, H(CF₂)₄-(CH₂)₂-OC(O)-(CH₂)₂-Si(OCH₃)₃, H(CF₂)₄-(CH₂)₂-OC(O)-(CH₂)₂-SiCH₃(OCH₃)₂, H(CF₂)₅-(CH₂)₂-OC(O)-(CH₂)₂-Si(OCH₃)₃, H(CF₂)₅-(CH₂)₂-OC(O)-(CH₂)₂-SiCH₃(OCH₃)₂, H(CF₂)₆-(CH₂)₂-OC(O)-(CH₂)₂-Si(OCH₃)₃, H(CF₂)₆-(CH₂)₂-OC(O)-(CH₂)₂-SiCH₃(OCH₃)₂, H(CF₂)₇-(CH₂)₂-OC(O)-(CH₂)₂-Si(OCH₃)₃, H(CF₂)₇-(CH₂)₂-OC(O)-(CH₂)₂-SiCH₃(OCH₃)₂, H(CF₂)₈-(CH₂)₂-OC(O)-(CH₂)₂-Si(OCH₃)₃, H(CF₂)₈-(CH₂)₂-OC(O)-(CH₂)₂-SiCH₃(OCH₃)₂, H(CF₂)₄-(CH₂)₂-OC(O)-CH(CH₃)-CH₂-Si(OCH₃)₃, H(CF₂)₄-(CH₂)₂-OC(O)-CH(CH₃)-CH₂-SiCH₃(OCH₃)₂, H(CF₂)₅-(CH₂)₂-OC(O)-CH(CH₃)CH₂-Si(OCH₃)₃, H(CF₂)₅-(CH₂)2-OC(O)-CH(CH₃)-CH₂-SiGH₃(OCH₃)₂, H(CF₂)₆-(CH₂)₂-OC(O)-CH(CH₃)-CH₂-Si(OCH₃)₃, H(CF₂)₆-(CH₂)₂-OC(O)-CH(CH₃)-CH₂-SiCH₃(OCH₃)₂, H(CF₂)₇-(CH₂)₂-OC(O)-CH(CH₃)-CH₂-Si(OCH₃)₃, H(CF₂)₇-(CH₂)₂-OC(O)CH(CH₃)-CH₂-SiCH₃(OCH₃)₂, H(CF₂)₈-(CH₂)₂-OC(O)-CH(CH₃)-CH₂-Si(OCH₃)₃, H(CF₂)₈-(CH₂)₂-OC(O)-CH(CH₃)-CH₂-SiCH₃(OCH₃)₂, (CF₃)₂CF-(CH₂)₂-OC(O)-(CH₂)₂-Si(OCH₃)₃, (CF₃)₂CF-(CH₂)₂-OC(O)-(CH₂)₂-SiCH₃(OCH₃)₂, (CF₃)₂CFCF₂-(CH₂)₂-OC(O)-(CH₂)₂-Si(OCH₃)₃, (CF₃)₂CFCF₂-(CH₂)₂-OC(O)-(CH₂)₂-SiCH₃(OCH₃)₂, (CF₃)₂CF-(CF₂)₂-(CH₂)₂-OC(O)-(CH₂)₂-Si(OCH₃)₃, (CF₃)₂CF-(CF₂)₂-(CH₂)₂-OC(O)-(CH₂)₂-SiCH₃(OCH₃)₂, (CF₃)₂CF-(CF₂)₃-(CH₂)₂-OC(O)-(CH₂)₂-Si(OCH₃)₃, (CF₃)₂CF-(CF₂)₃-(CH₂)₂-OC(O)-(CH₂)₂-SiCH₃(OCH₃)₂, CF₃)₂CF-(CF₂)₄-(CH₂)₂-OC(O)-(CH₂)₂-Si(OCH₃)₃, (CF₃)₂CF-(CF₂)₄-(CH₂)₂-OC(O)-(CH₂)₂-SiCH₃(OCH₃)₂, (CF₃)₂CF-(CF₂)₅-(CH₂)₂-OC(O)-(CH₂)₂-Si(OCH₃)₃, (CF₃)₂CF-(CF₂)₅-(CH₂)₂-OC(O)-(CH₂)₂-SiCH₃(OCH₃)₂, (CF₃)₂CF-(CH₂)₂-OC(O)-CH(CH₃)-CH₂-Si(OCH₃)₃, (CF₃)₂(CF-(CH₂)₂-OC(O)-CH(CH₃)-CH₂-SiCH₃(OCH₃)₂, (CF₃)₂CFCF₂-(CH₂)₂-OC(O)-CH(CH₃)-CH₂-Si(OCH₃)₃, (CF₃)₂CFCF₂-(CH₂)₂-OC(O)-CH(CH₃)-CH₂-SiCH₃(OCH₃)₂, (CF₃)₂CF-(CF₂)₂-(CH₂)₂-OC(O)-CH(CH₃)-CH₂-Si(OCH₃)₃, (CF₃)₂CF-(CF₂)₂-(CH₂)₂-OC(O)-CH(CH₃)-CH₂-SiCH₃(OCH₃)₂, (CF₃)₂CF-(CF₂)₃-(CH₂)₂-OC(O)-CH(CH₃)-CH₂-Si(OCH₃)₃, (CF₃)₂CF-(CF₂)₃-(CH₂)₂-OC(O)-CH(CH₃)-CH₂-SiCH₃(OCH₃)₂, (CF₃)₂CF-(CF₂)₄-(CH₂)₂-OC(O)-CH(CH₃)-CH₂-Si(OCH₃)₃, (CF₃)₂CF-(CF₂)₄-(CH₂)₂-OC(O)-CH(CH₃)-CH₂-SiCH₃(OCH₃)₂, (CF₃)₂CF-(CF₂)₅-(CH₂)₂-OC(O)-CH(CH₃)-CH₂-Si(OCH₃)₃, (CF₃)₂CF-(CF₂)₅-(CH₂)₂-OC(O)-CH(CH₃)-CH₂-SiCH₃(OCH₃)₂, (OCH₃)₃Si-(CH₂)₂-(O)C-C₆H₄-C(CF₃)₂-C₆H₄-OC(O)-(CH₂)₂-Si(OCH₃)₃, (OCH₃)₂CH₃Si-(CH₂)₂-(O)C-C₆H₄-C(CF₃)₂-C₆H₄-OC(O)-(CH₂)₂-SiCH₃(OCH₃)₂, (OCH₃)₃Si-CH₂-CH(CH₃)-(O)C-C₆H₄-C(CF₃)₂-C₆H₄-OC(O)-CH(CH₃)-CH₂-Si( OCH₃)₃, (OCH₃)₂CH₃Si-CH₂-CH(CH₃)-(O)C-C₆H₄-C(CF₃)₂-C₆H₄-OC(O)-CH(CH₃)-CH₂-S iCH₃(OCH₃)_{2,} (OCH₃)₃Si-(CH₂)₂-(O)C-(CF₃)₂-OC(O)-(CH₂)₂-Si(OCH₃)₃, (OCH₃)₃Si-(CH₂)₂-(O)C-(CF₃)₃-OC(O)-(CH₂)₂-Si(OCH₃)₃, (OCH₃)₃Si-(CH₂)₄-(O)C-(CF₃)₄-OC(O)-(CH₂)₂-Si(OCH₃)₃, (OCH₃)₃Si-(CH₂)₂-(O)C-(CF₃)₅-OC(O)-(CH₂)₂-Si(OCH₃)₃, (OCH₃)₃Si-(CH₂)₂-(O)C-(CF₃)₆-OC(O)-(CH₂)₂-Si(OCH₃)₃, (OCH₃)₃Si-(CH₂)₂-(O)C-(CF₃)₇-OC(O)-(CH₂)₂-Si(OCH₃)₃, (OCH₃)₂CH₃Si-(CH₂)₂-(O)C-(CF₃)₂-OC(O)-(CH₂)₂-SiCH₃(OCH₃)₂, (OCH₃)₂CH₃Si-(CH₂)₂-(O)C-(CF₃)₃-OC(O)-(CH₂)₂-SiCH₃(OCH₃)₂, (OCH₃)₂CH₃Si-(CH₂)₂-(O)C-(CF₃)₄-OC(O)-(CH₂)₂-SiCH₃(OCH₃)₂, (OCH₃)₂CH₃Si-(CH₂)₂-(O)C-(CF₃)₅-OC(O)-(CH₂)₂-SiCH₃(OCH₃)₂, (OCH₃)₂CH₃Si-(CH₂)₂-(O)C-(CF₃)₆-OC(O)-(CH₂)₂-SiCH₃(OCH₃)₂, (OCH₃)₂CH₃Si-(CH₂)₂-(O)C-(CF₃)₇-OC(O)-(CH₂)₂-SiCH₃(OCH₃)₂, (OCH₃)₂CH₃Si-(CH₂)₂-(O)C-(CF₃)₈-OC(O)-(CH₂)₂-SiCH₃(OCH₃)₂, (OCH₃)₃Si-CH₂-CH(CH₃)-(O)C-(CF₃)₂-OC(O)-CH(CH₃)-CH₂-Si(OCH₃)₃, (OCH₃)₃Si-CH₂-CH(CH₃)-(O)C-(CF₃)₃-OC(O)-CH(CH₃)-CH₂-Si(OCH₃)₃, (OCH₃)₃Si-CH₂-CH(CH₃)-(O)C-(CF₃)₄-OC(O)-CH(CH₃)-CH₂-Si(OCH₃)₃, (OCH₃)₃Si-CH₂-CH(CH₃)-(O)C-(CF₃)₅-OC(O)-CH(CH₃)-CH₂-Si(OCH₃)₃. (OCH₃)₃Si-CH₂-CH(CH₃)-(O)C-(CF₃)₆-OC(O)-CH(CH₃)-CH₂-Si(OCH₃)₃, (OCH₃)₃Si-CH₂-CH(CH₃)-(O)C-(CF₃)₇-OC(O)-CH(CH₃)-CH₂-Si(OCH₃)₃, (OCH₃)₂CH₃Si-CH₂-CH(CH₃)-(O)C-(CF₃)₂-OC(O)--CH(CH₃)CH₂-SiCH₃(OCH₃) ₂, (OCH₃)₂CH₃Si-CH₂-CH(CH₃)-(O)C-(CF₃)₃-OC(O)-CH(CH₃)-CH₂-SiCH₃(OCH₃) ₂, (OCH₃)₂CH₃Si-CH₂-CH(CH₃)-(O)C-(CF₃)₄-OC(O)--CH(CH₃)-CH₂-SiCH₃(OCH₃) ₂, (OCH₃)₂CH₃Si-CH₂-CH(CH₃)-(O)C-(CF₃)₅-OC(O)-CH(CH₃)-CH₂-SiCH₃(OCH₃) ₂, (OCH₃)₂CH₃Si-CH₂-CH(CH₃)-(O)C-(CF₃)₆-OC(O)-CH(CH₃)CH₂-SiCH₃(OCH₃) ₂, (OCH₃)₂CH₃Si-CH₂-CH(CH₃)-(O)C-(CF₃)₇-OC(O)-CH(CH₃)-CH₂-SiCH₃(OCH₃) ₂, and (OCH₃)₂CH₃Si-CH₂-CH(CH₃)-(O)C-(CF₃)₈-OC(O)-CH(CH₃)-CH₂-SiCH₃(OCH₃) ₂.

These organosilicon compounds can be easily prepared by a known synthesis method. As a representative example, the organosilicon compound can be prepared by adding an alkoxysilane compound having a Si-H group to a fluorine atom-containing organic compound that has an alkenyl group by a hydrosilylation reaction.

Although these fluorine compounds as the component (A), which are all essential to impart excellent oil repellency to the composition of the present invention, may be used alone, to improve the effects even further, a combination of at least two kinds or more selected from among them may also be used.

The condensation catalyst as the component (B) in the present invention is an essential component in order to carry out the hydrolysis-condensation reaction of the component (A) in the present invention. The condensation catalyst is selected from among acid catalysts, basic catalysts, and organometal compounds. Examples of acid catalysts that can be used include one kind or two or more kinds selected from organic acids and inorganic acids. Specific examples of organic acids include 2-aminoethylphosphonic acid, inosinic acid, 2-glyceric acid, D-glucose-1-phosphoricacid, formic acid, oxalic acid, acetic acid, dichloroacetic acid, trichloroacetic acid, nitroacetic acid, picric acid, 2-pyridinecarboxylic acid, trifluoroacetic acid, and trifluoromethylsulfonic acid. Examples of inorganic acids include perchloric acid, hydrochloric acid, hydrobromic acid, nitric acid, sulfuric acid, and phosphoric acid.

Examples of basic catalysts include alkali metal hydroxides such as potassium hydroxide, sodium hydroxide, and lithium hydroxide, alkaline earth metal hydroxides such as calcium hydroxide and barium hydroxide, amine compounds such as ammonium hydroxide, trimethylamine, triethylamine, pyridine, and lutidine, and quaternary ammonium salts such as tetramethylammonium hydroxide and tetraethylammonium hydroxide.

Examples of organometal compounds include metal alkoxides such as metal methoxides, metal ethoxides, or metal isopropoxides having as a metal atom B, Al, Ti, V, Cr, Mn, Fe, Co, Ni, Cu, Zn, Zr, Mo, Ru, Rh, Pd, Ag, Cd, Sn, Os, Ir, Hg, or a rare earth; metal acid salts such as metal stearates and metal octylates; and metal chelates such as metal acetylacetonates, metal octylene glycolates, or metal ethyl acetoacetates. From the perspective of availability and suitable reactivity, B, Al, Ti, and Zr metal alkoxides, metal acid salts, and metal chelates are preferred. More preferred are tetra-n-butoxyzirconium, zirconium tetra-acetylacetonate, tetra-n-propoxyzirconium, tetra-n-butoxytitanium, diisopropoxytitanium bis(ethylacetoacetate), aluminum tris(ethylacetoacetate), aluminum tris(acetylacetonate), and boron isopropoxide. As an alcohol for the metal alkoxide, easily availableisopropanolor butanol,for example,may be used. Further, considering safety in air of this metal alkoxide, a high molecular weight alcohol that has been artificially synthesized or extracted from a natural product may also be used.

The used amount of the condensation catalyst as the component (B) is, based on 100 parts by weight of the component (A), 0.001 to 100 parts by weight, and more preferably 0.01 to 20 parts by weight. If the used amount is less than 0.001 parts by weight, its function as a condensation catalyst cannot be sufficiently fulfilled, which makes it impossible to obtain a cured film having a sufficient performance. Further, if the used amount exceeds 100 parts by weight, the storage stability of the composition deteriorates.

Preferably, the coating material composition of the present invention further comprioses (C) an alkoxysilane that does not containafluorineatomand/or (D) a silicone resin. These components have an alkoxysilyl group that can undergo co-hydrolysis-condensation with the component (A), which is the essential component of the coating material composition of the present invention, or are very compatible with the hydrolysis-condensation product of the component (A). These components can give the composition of the present invention adhesive properties to a substrate, and can also improve the physical properties, such as strength, of a coating film formed from the composition of the present invention.

The component (C) of the present invention is an alkoxysilane that is represented by the general formula (2) and does not contain a fluorine atom, and/or a hydrolysis-condensation product thereof.

SiR³_{b}(OR⁴)_{4-b} (2)

In the general formula (2),
R³ represents a hydrocarbon group that does not contain a fluorine atom and that has 1 to 12 carbon atoms,
R⁴ represents an alkyl group having 1 to 12 carbon atoms or an acyl group having 1 to 12 carbon atoms, and
b denotes 0 or an integer of 1 to 3.

It is preferable that R³ be an alkyl group, an alkenyl group, or an aromatic hydrocarbon group. From the perspective that the rate of the hydrolysis-condensation reaction is fast, a methyl group or an ethyl group is especially preferred. It is preferable that R⁴ be a methyl group or an ethyl group. Specific examples of the alkoxysilane that is represented by the general formula (2) and does not contain a fluorine atom include tetramethoxysilane, tetraethoxysilane, methyltrimethoxysilane, methyltriethoxysilane, ethyltrimethoxysilane, ethyltriethoxysilane, phenyltrimethoxysilane, phenyltriethoxysilane, dimethyldimethoxysilane, diethyldimethoxysilane, diethyldiethoxysilane, diphenyldimethoxysilane, diphenyldiethoxysilane, trimethylmethoxysilane, and triethylethoxysilane. Among these, especially preferred are methyltrimethoxysilane, ethyltrimethoxysilane, methyltriethoxysilane, ethyltriethoxysilane, tetramethoxysilane, and tetraethoxysilane, as they have a fast hydrolysis-condensation reaction rate. One kind of these compounds may be used alone, or two or more kinds may be used in combination.

The component (C) may be solely an alkoxysilane that does not contain a fluorine atom, or may be a mixture of an alkoxysilane that does not contain a fluorine atom and a hydrolysis-condensation product thereof, or may be a hydrolysis-condensation product of an alkoxysilane that does not contain a fluorine atom. The hydrolysis-condensation product of the alkoxysilane that does not contain a fluorine atom of the present invention has a low degree of polymerization of 2 to 20. It is preferable that the hydrolysis-condensation product of the alkoxysilane that does not contain a fluorine atom be a hydrolysis-condensation product of a tetraalkoxysilane called an alkylsilicate. Specific examples of alkylsilicates include a silicate selected from among compounds in which the alkyl is a methyl group, an ethyl group, an isopropyl group, an n-propyl group, an isobutyl group, or an n-butyl group. Among these, from the perspective of a fast hydrolysis-condensation reaction rate, an alkylsilicate in which the alkyl group is a methyl group or an ethyl group is especially preferred. One kind of these compounds may be used alone, or two or more kinds may be used in combination.

The used amount of the component (C) is, based on 100 parts by weight of the component (A), 0.001 to 10,000 parts by weight, preferably 0.1 to 1,000 parts by weight, and more preferably 1 to 200 parts by weight. The component (C) may be added as is, or may be used by subjecting the component (C) to hydrolysis-condensation with the component (A).

Next, the silicone resin serving as the component (D) of the present invention will be described. The silicone resin is added not only to improve the adhesion properties of the coating material composition obtainable from the present invention with various substrates, but also to improve the mechanical strength of the coating material. The silicone resin of the present invention is an organopolysiloxane, in which the average composition of the siloxane units is represented by the following general formula (3),

R⁵_{c}SiO_{4-c/2} (3)

wherein,
R⁵ may be the same or different and represents an alkyl group, an alkenyl group, or an aromatic hydrocarbon group, the group having 1 to 12 carbon atoms, and
c is 0.5 to 2.0.

Based on the total of the siloxane units forming the silicone resin of the present invention, the triorganosiloxane unit content is 0 to 80 mol%, the diorganosiloxane unit content is 0 to 60 mol%, the monoorganosiloxane unit content is 0 to 80 mol%, and the content of SiO_{4/2} units not having an organo group is 0 to 60 mol%. Preferred is a polyorganosiloxane resin formed from 10 to 80 mol% of triorganosiloxane units and 20 to 90 mol% of SiO_{4/2} units not having an organo group based on the total of the siloxane units. Such a polyorganosiloxane resin can be produced by a method known to the skilled person in the art, by subjecting a chlorosilane or an alkoxysilane corresponding to the constituent units to hydrolysis-condensation.

R⁵ in the general formula (3) of this silicone resin may be the same or different, and represents an alkyl group, an alkenyl group, or an aromatic hydrocarbon group, the group having 1 to 12 carbon atoms. However, it is preferable that at least one alkenyl group be included in the molecule. This is because when the coating material composition is applied on the surface of silicone rubber, stronger adhesion properties can be obtained due to the alkenyl group.

The component (D) may be used alone, or optionally, two kinds or more may be used in combination. The used amount of the component (D) is, based on 100 parts by weight of the component (A), 0.001 to 10,000 parts by weight, preferably 0.1 to 1, 000 parts by weight, and more preferably 1 to 200 parts by weight. Although the component (D) may be used in place of the component (C), it is preferred to use the component (C) and the component (D) together because a synergistic effect of these components is exhibited.

In the present invention, depending on the application, the composition of the present invention may be used by dispersing or dissolving it in an appropriate solvent. Examples of preferably used solvents include hydrocarbons such as hexane, octane, benzene, toluene, xylene, ethylbenzene, cyclohexane, and methylcyclohexane, esters such as methyl acetate, ethyl acetate, butyl acetate, and ethylene glycol mono ethyl acetate, ketones such as acetone, methyl ethyl ketone, methyl isobutyl ketone, methyl amyl ketone, and cyclohexanone, alcohols such as methanol, ethanol, propanol, butanol, pentanol, ethylene glycol monoethyl ether, ethylene glycol monobutyl ether, and water. The used amount of solvent is, based on 100 parts by weight of the component (A), 0.001 to 100,000 parts by weight, preferably 0.1 to 10,000 parts by weight, and more preferably 1 to 1,000 parts by weight.

In the present invention, when using water as a solvent, the composition may be used as an emulsion by adding a suitable amount of a surfactant and forcibly stirring the resultant mixture with a homogenizer or the like. In this case, although various known surfactants, such as an anionic surfactant, a cationic surfactant, or a nonionic surfactant, may be used as the surfactant, a nonionic surfactant is preferred. Examples of nonionic surfactants include polyoxyalkylene alkyl ethers represented by the general formula Ra-O-(CH₂CH₂O)ₘ-(CHRₓCH₂O)ₙ-H, polyoxyalkylene fatty acid esters represented by the general formula RaCOO-(CH₂CH₂O)ₘ-(CHRₓCH₂O)ₙ-H, polyoxyalkylene alkyl amines represented by the general formula RaN-[(CH₂CH₂O)_{m'}-(CHRₓCH₂O)_{n'}-H][CH₂CH₂O)_{m"}-(CHRₓCH₂O)_{n"}-H], polyoxyalkylene alkyl amides represented by the general formula RaCON-[(CH₂CH₂O)_{m'}-(CHRₓCH₂O)_{n'}-H][CH₂CH₂O)_{m"}-(CHRₓCH₂O)_{n"}-H], polyoxyethylene sorbitan fatty acid esters, and glycerin fatty acid esters.

In the present invention, in addition to the above-described components (A) to (D), various inorganic or organic fillers may also be used to improve the physical properties of the coating film. Examples of such fillers include fumed silica, precipitated silica, ground silica, diatomaceous earth, iron oxide, zinc oxide, titanium oxide, magnesium oxide, calcium oxide, magnesium hydroxide, calcium hydroxide, magnesium carbonate, calcium carbonate, barium sulfate, magnesium silicate (talc), aluminum silicate (clay), calcium metasilicate, zeolite, hydrotalcite, graphite, carbon black, quartz, alumina and the like. The used amount of these fillers is arbitrary, as long as the purpose of the present invention is not harmed.

In the present invention, in addition to the above-described components (A) to (D), to improve the adhesion properties of the coating material to the substrate or the physical properties of the coating material, a silane coupling agent can also be used. Specific examples of such a silane coupling agent include silane compounds such as vinyltrimethoxysilane, vinyltriethoxysilane, vinyltriacetoxysilane, vinyltrimethoxyethoxysilane, vinyldimethylethoxysilane, vinylmethyldiethoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-aminopropyltrimethoxysilane, γ-aminopropyltriethoxysilane, γ-mercaptotrimethoxysilane, γ-mercaptopropyltriethoxysilane, N-β-(aminoethyl)- γ-aminopropyltrimethoxysilane, β-cyanoethyltriethoxysilane, chloromethyltrimethoxysilane, chloromethyltriethoxysilane , glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, diethoxy-3-glycidoxypropylmethylsilane, dimethoxy-3-glycidoxypropylmethylsilane, 3-glycidoxypropyldimethoxysilane, γ-(meth)acryloyloxypropyldimethylethoxysilane, γ-(meth)acryloyloxypropylmethyldiethoxysilane, γ-glycidoxypropyltripropoxysilane, γ-glycidoxypropyltributoxysilane, γ-glycidoxypropyltrimethoxyethoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltrimethoxyethoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, γ-aminopropylmethyldimethoxysilane, γ-aminopropylmethyldiethoxysilane, methylvinyldimethoxysilane, methylvinyldiethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldimethoxyethoxysilane, γ-glycidoxypropylmethyldiphenoxysilane, γ-glycidoxypropylethyldimethoxysilane, γ-glycidoxypropylethyldiethoxysilane, γ-glycidoxypropylethyldipropoxysilane, γ-glycidoxypropylvinyldimethoxysilane, γ-glycidoxypropylvinyldiethoxysilane, γ-glycidoxypropylphenyldimethoxysilane, γ-glycidoxypropylphenyldiethoxysilane, and γ-(meth)acryloyloxypropyltrimethoxysilane.

Examples of substrates to which the coating material of the present invention can be applied are not especially limited, and may include metal, glass, plastics, ceramics, rubber, or combinations thereof (composite materials, laminate materialsetc.). As a substrate that can exhibit oil repellency, which is a characteristic feature of the coating material of the present invention, it is preferred to use the coating material on metal, plastic, or rubber. Especially, the oil repellency of silicone rubber can be dramatically improved by using the coating material on silicone rubber.

Examples of methods for applying the composition of the present invention onto various substrate surfaces include hand painting by manually applying a coating solution to a substrate with a cotton cloth, paper, a sponge or the like into which the coating solution has been soaked, brushing, dip coating, flow coating, curtain coating, spin coating, spray coating, bar coating, roll coating, gravure coating, air knife coating and the like.

The coating material composition of the present invention can be used to form an oil-repellent coating film on various substrates by applying the coating material composition onto a substrate surface by one of the above-described application methods, and then subjecting the applied coating material composition to hydrolytic condensation. The hydrolysis-condensation reaction proceeds at a reaction temperature of 0 to 250°C. Preferably, the temperature is in the range of 20 to 220°C, and more preferably in the range of 40 to 200°C. As a specific example, the oil-repellent film can be formed by applying the coating material composition onto a substrate, leaving for 1 hour at 25°C, heating for 15 minutes at 100°C to preliminarily cure the composition, and then heating at 200°C for 4 hours.

The present invention relates to a coating material composition having oil repellency. Since the obtained coating material has a low surface energy and exhibits excellent oil repellency, the coating material composition can be applied for various applications, and can especially be utilized for silicone rubber applications. For example, the present invention relates to a composition that is useful as a coating material in industrial fields such as automotive, electronic, electric, and construction fields.

### Examples

The present invention will now be described in more detail with reference to the following examples and comparative examples. However, the present invention is not limited to the following working examples. The term "parts" in the examples refers to "parts by weight."

Contact Angle Measurement Method Contact angle measurement was carried out using the Contact Angle meter CA-X150 manufactured by FACE Co., Ltd. A drop (about 0.002 cc) of n-hexadecane (Reagent Grade, manufactured by Kanto Chemical Co., Ltd.) was dropped using a microsyringe onto the surface of a clean coating film, and the contact angle was measured after 1 minute had elapsed. The average value from 5 measurements was taken as the contact angle.

Preparation of Coating Material Compositions Coating material compositions were prepared in the following manner.

### Preparation Example 1

Toluene (100 parts) was added at room temperature to a 200 ml beaker. Then, 5 parts of an alkoxysilane represented by the following formula (i) and having a fluorine atom as the component (A), 7.5 parts of tetraethoxysilane as the component (C), and 5 parts of a polymethylsiloxane resin, as the component (D), consisting of 58 mol% of a (CH₃)₃SiO_{1/2} unit, 2 mol% of a (CH₂=CH)(CH₃)₂SiO_{1/2} unit, and 40 mol% of a SiO_{4/2} unit were added, and the resultant mixture was stirred. Next, while stirring, 2 parts of titanium tetrabutoxide was added as the component (B) to thereby prepare the coating material composition according to the present invention.

C₆F₅-CH₂-OC(O)-(CH₂)₂-SiCH₃(OCH₃)₂ (i)

### Preparation Example 2

A coating material composition was prepared in the same manner as in Preparation Example 1, except that 5 parts of an alkoxysilane represented by the following formula (ii) and having a fluorine atom was added as the component (A).

(OCH₃)₃-Si-(CH₂)₂-(O)C-(CF₃)₆-OC(O)-(CH₂)₂-Si(OCH₃)₃ (ii)

### Preparation Example 3

A coating material composition was prepared in the same manner as in Preparation Example 1, except that 5 parts of an alkoxysilane represented by the following formula (iii) and having a fluorine atom was added as the component (A).

CF₃(CF₂)₅-(CH₂)₂-OC(O)-(CH₂)₂-SiCH₃(OCH₃)₂ (iii)

### Preparation Example 4

A coating material composition was prepared in the same manner as in Preparation Example 1, except that 5 parts of an alkoxysilane represented by the following formula (iv) and having a fluorine atom was added as the component (A).

(CF₃)₂CF-(CF₂)₃-(CH₂)₂-OC(O)-(CH₂)₂-SiCH₃(OCH₃)₂ (iv)

### Preparation Example 5

A coating material composition was prepared in the same manner as in Preparation Example 3, except that the component (D) was not added.

### Preparation Example 6

A coating material composition was prepared in the same manner as in Preparation Example 1, except that the component (A) was not added and 12.5 parts of tetraethoxysilane was added as the component (C).

### Coating Treatment Method

A glass test piece, a SUS test piece, and a silicone rubber test piece that were 25 mm wide, 50 mm long, and 2 mm thick were prepared. The substrate surfaces were then treated by a dip-coating method (dipped for 10 seconds at room temperature, then raised at a rate of 1 cm/second) . The treated test pieces were dried for 1 hour at 50% humidity and a temperature of 25°C, and then heated for 15 minutes at 100°C in an air-circulation type oven to preliminarily cure the compositions. The test pieces were then placed in an air-circulation type oven set at 200°C, and heated for 4 hours to form a cured film.

### Example 1

The surfaces of a glass test piece, a SUS test piece, and a silicone rubber test piece were each coated with the coating material composition of Preparation Example 1, and cured films were formed. The test pieces were left for 24 hours at room temperature, and then the contact angle of the sample surfaces was measured. The results are shown in Table 1.

### Example 2

The surfaces of a glass test piece, a SUS test piece, and a silicone rubber test piece were each coated with the coating material composition of Preparation Example 2, and cured films were formed. The test pieces were left for 24 hours at room temperature, and then the contact angle of the sample surfaces was measured. The results are shown in Table 1.

### Example 3

The surfaces of a glass test piece, a SUS test piece, and a silicone rubber test piece were each coated with the coating material composition of Preparation Example 3, and cured films were formed. The test pieces were left for 24 hours at room temperature, and then the contact angle of the sample surfaces was measured. The results are shown in Table 1.

### Example 4

The surfaces of a glass test piece, a SUS test piece, and a silicone rubber test piece were each coated with the coating material composition of Preparation Example 4, and cured films were formed. The test pieces were left for 24 hours at room temperature, and then the contact angle of the sample surfaces was measured. The results are shown in Table 1.

### Example 5

The surfaces of a glass test piece, a SUS test piece, and a silicone rubber test piece were each coated with the coating material composition of Preparation Example 5, and cured films were formed. The test pieces were left for 24 hours at room temperature, and then the contact angle of the sample surfaces was measured. The results are shown in Table 1.

### Comparative Example 1

The surfaces of a glass test piece, a SUS test piece, and a silicone rubber test piece were each coated with the coating material composition of Preparation Example 6, and cured films were formed. The test pieces were left for 24 hours at room temperature, and then the contact angle of the sample surfaces was measured. The results are shown in Table 1.

### Comparative Example 2

An oil-repellency test was carried out on an addition-curable type silicone rubber blended with an alkoxysilane having a fluorine atom. To a universal kneader were added 100 parts of a polydimethylsiloxane that was blocked at both ends with a dimethylvinylsilyl group and had a viscosity at 25°C of 20,000 mPa·s, 40 parts of fumed silica having a specific surface area of 200 m²/g, 8 parts of hexamethyldisilazane, and 1 part by weight of deionized water, and the resultant mixture was stirred and mixed for 1 hour at room temperature. The temperature was then increased to 150°C, and the mixture was heated and mixed for 2 hours. Then, the mixture was cooled to room temperature. To this mixture was added 3.1 parts of a polymethylhydrogensiloxane, which was formed from 67 mole% of (CH₃)HSiO₂/₂ units and 33 mole% of (CH₃)₂SiO₂/₂ units and which had a viscosity at 25°C of 20 mPa·s. Then, 0.8 parts of acetylene alcohol to extend the time until curing at room temperature and 0.3 parts of a platinum-vinylsiloxane complex solution in which the platinum atom content was 0.5% by weight were added, and the resultant mixture was mixed until uniform. Next, 5 parts of a fluorine atom-containing alkoxysilane represented by the following formula (i) as the component (A) of the present invention was added to prepare a silicone rubber composition. The silicone composition was filled into a mold having internal cavity dimensions of 150 mm x 150 mm x thickness 2 mm, and hot-pressed at 170°C for 10 minutes to produce a sheet sample. This sheet sample was then placed in an air-circulation type oven set at 200°C, and heated for 4 hours to perform secondary curing, whereby an oil-repellent test sample was obtained. The contact angle measurement results are shown in Table 1.

C₆F₅-CH₂-OC(O)-(CH₂)₂-SiCH₃(OCH₃)₂ (i)

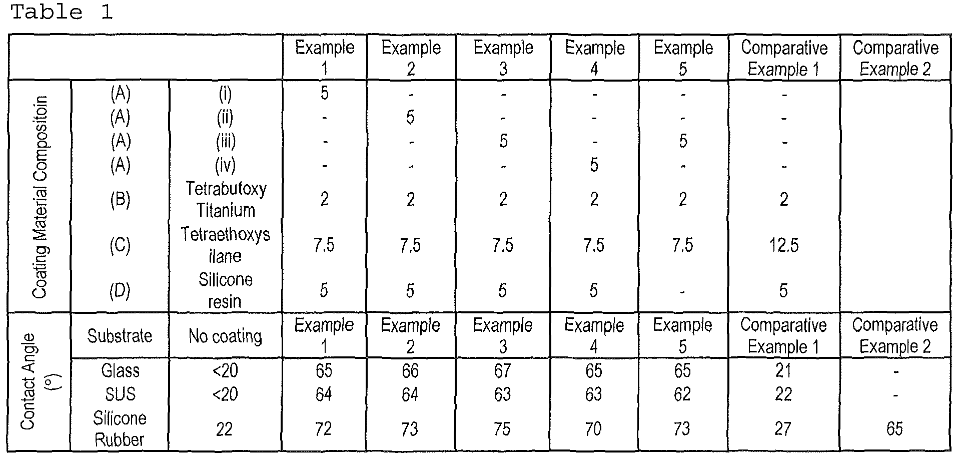

## Claims

1. An oil-repellent coating material composition **characterized by** comprising:
(A) an alkoxysilane, represented by the following general formula (1), having a hydrocarbon group to which at least one or more fluorine atoms are bonded;
R^{f}[-X-Y-SiR¹ₐ(OR²)₃₋ₐ]ₘ (1)
wherein
R^{f} represents an alkyl group, an alkenyl group, or an aromatic hydrocarbon group, the group having at least one or more fluorine atoms and 1 to 20 carbon atoms;
X represents an oxygen atom or a divalent organic group containing an oxygen atom;
Y represents a spacer group represented by (CH(Z)-)ₙ
wherein Z is a substituent selected from a hydrogen atom, a halogen atom, or a hydrocarbon group having 1 to 3 carbon atoms, and n denotes an integer of 2 to 8;
R¹ and R² may be the same or different hydrocarbon group(s) having 1 to 10 carbon atoms;
m is 1 or 2; and
a is 0, 1, or 2); and
(B) a condensation catalyst.

2. The oil-repellent coating material composition according to claim 1, **characterized by** further comprising 0.001 to 10,000 parts by weight of (C) an alkoxysilane represented by the following general formula (2) and that does not contain a fluorine atom and/or a hydrolysis-condensation product thereof based on 100 parts by weight of the component (A), and/or 0.001 to 10, 000 parts by weight of (D) a silicone resin based on 100 parts by weight of the component (A),
SiR³_{b}(OR⁴)_{4-b} (2)
wherein
R³ represents a hydrocarbon group that does not contain a fluorine atom and that has 1 to 12 carbon atoms,
R⁴ represents an alkyl group having 1 to 12 carbon atoms or an acyl group having 1 to 12 carbon atoms, and
b denotes 0 or an integer of 1 to 3.

3. The oil-repellent coating material composition according to claim 1 or 2, **characterized in that** X in the general formula (1) is an ester group.

4. Use of the oil-repellent coating material composition according to any of claims 1 to 3, for coating silicone rubber.
